# EUROPEAN PATENT APPLICATION

(11) **EP 4 800 752 A1**
(43) Date of publication of application: **02.09.2026**
(21) Application number: 24899231.5
(22) Date of filing: 08.07.2024
(51) Int. Cl.: H01M 4/133

(54) **SECONDARY BATTERY AND ELECTRIC APPARATUS**

(30) Priority: 07.12.2023 CN 202311679328
(71) Applicant: Contemporary Amperex Technology Co., Limited, Ningde, Fujian 352100 (CN)
(72) Inventor: WU, Chou, Ningde, Fujian 352100 (CN); MA, Jianjun, Ningde, Fujian 352100 (CN); LIU, Wei, Ningde, Fujian 352100 (CN); HE, Libing, Ningde, Fujian 352100 (CN)
(74) Representative: Lorenz Seidler Gossel Part. mbB
(86) International application number: PCT/CN2024/104251
(87) International publication number: WO 2025/118580

(57) **Abstract**

The present disclosure provides a secondary battery and an electric apparatus. The secondary battery comprises a negative electrode sheet. The negative electrode sheet comprises a negative electrode current collector and a negative electrode film layer formed on at least one surface of the negative electrode current collector. The negative electrode film layer has a first surface away from the negative electrode current collector and a second surface arranged opposite to the first surface. The thickness of the negative electrode film layer is denoted as H, the region from the second surface of the negative electrode film layer to the thickness range of 0.3 H is denoted as a first region of the negative electrode film layer, and the region from the first surface of the negative electrode film layer to the thickness range of 0.3 H is denoted as a second region of the negative electrode film layer. I_{D}/I_{G} of an active material in the second region is greater than I_{D}/I_{G} of an active material in the first region. I_{D}/I_{G} is the ratio of the D peak intensity and the G peak intensity obtained by Raman mapping. I_{D} represents the D peak intensity of a Raman spectrum at 1350±100 cm⁻¹, and I_{G} represents the G peak intensity of the Raman spectrum at 1580±100 cm⁻¹.

## Description

### CROSS-REFERENCE TO RELATED APPLICATIONS

The present disclosure claims priority to Chinese Patent Application No. 202311679328.6, filed on December 7, 2023 and entitled "SECONDARY BATTERY AND POWER CONSUMING APPARATUS", which is incorporated herein by reference in its entirety.

### TECHNICAL FIELD

The present disclosure belongs to the technical field of lithium batteries, and in particular, to a secondary battery and a power consuming apparatus.

### BACKGROUND

In recent years, secondary batteries have been widely used in energy storage power supply systems such as water power stations, thermal power stations, wind power stations, and solar power stations, and in multiple fields such as electric tools, electric bicycles, electric motorcycles, electric vehicles, military equipment, and aerospace. With the increasingly widespread application of secondary batteries, their performance faces increasingly demanding requirements. For example, there is a need for secondary batteries to balance various properties such as energy density, kinetic performance, and service life. However, challenges encountered in the existing technology are that improving the kinetic performance of secondary batteries often makes it difficult to simultaneously achieve a long cycle life of the secondary batteries, and improving the energy density often comes at the expense of both kinetic performance and service life of the secondary batteries.

### SUMMARY

The present disclosure is developed in view of the above technical challenges. Its purpose is to provide a secondary battery that have long cycle life and high energy density simultaneously.

A first aspect of the present disclosure provides a secondary battery, which includes a negative electrode plate. The negative electrode plate includes a negative electrode current collector and a negative electrode film layer formed on at least one surface of the negative electrode current collector. The negative electrode film layer has a first surface distant from the negative electrode current collector and a second surface arranged opposite to the first surface. The thickness of the negative electrode film layer is denoted as H. A region within a thickness range from the second surface to 0.3 H of the negative electrode film layer is denoted as a first region of the negative electrode film layer. A region within a thickness range from the first surface to 0.3 H of the negative electrode film layer is denoted as a second region of the negative electrode film layer. I_{D}/I_{G} of an active material in the second region is greater than I_{D}/I_{G} of an active material in the first region. I_{D}/I_{G} is a ratio of D peak intensity to G peak intensity of a Raman spectrum. I_{D} represents the D peak intensity of the Raman spectrum at 1,350±100 cm⁻¹. I_{G} represents the G peak intensity of the Raman spectrum at 1,580±100 cm⁻¹.

I_{D}/I_{G} of the Raman spectrum may be used for characterizing the degree of disorder on the surface of the active material. It can be understood that the first region and the second region each include at least one active material. I_{D}/I_{G} of the active material in the second region being greater than I_{D}/I_{G} of the active material in the first region does not mean that I_{D}/I_{G} of each active material in the second region must be greater than I_{D}/I_{G} of any active material in the first region. I_{D}/I_{G} of the active material in the second region away from the current collector in the negative electrode plate being greater than I_{D}/I_{G} of the active material in the first region means that the active material in the second region on an outer side of the electrode plate has a higher average degree of disorder than the active material in the first region. In materials with a high degree of disorder, the active ions can be intercalated into and deintercalated from the active material more easily, thus effectively reducing volume expansion in an ion intercalation/deintercalation process, and improving the cycling performance of the battery. Simultaneously, the electrolyte solution can also wet the active material more readily, improving the kinetic performance of the battery. I_{D}/I_{G} of the active material in the first region close to the current collector in the negative electrode plate is lower, such that the active material has higher capacity and can be more easily compacted in a cold pressing process, improving the compaction density of the electrode plate, and enabling the secondary battery to have high energy density. Compared to a single-layer electrode plate prepared by simply mixing active materials with different I_{D}/I_{G}, the dual-layer design can achieve the same battery energy density with a reduced negative electrode film layer thickness, further overcoming the problems associated with excessive negative electrode film layer thickness, such as elongated transport path and degradation of battery kinetics. Therefore, this secondary battery can have improved cycling stability and kinetic performance while simultaneously maintaining high energy density.

In any of embodiments of the present disclosure, a difference ΔK between I_{D}/I_{G} of the active material in the second region and I_{D}/I_{G} of the active material in the first region satisfies: 0<ΔK≤0.4, optionally 0.1≤ΔK≤0.25.

A secondary battery with a difference ΔK between I_{D}/I_{G} of the active material in the second region and I_{D}/I_{G} of the active material in the first region within the above range can more effectively balance the cycling stability, kinetic performance, and battery capacity of the battery.

In any of embodiments of the present disclosure, I_{D}/I_{G} of the active material in the first region is less than or equal to 0.14, optionally 0.05 to 0.1; and/or, I_{D}/I_{G} of the active material in the second region is greater than or equal to 0.1, optionally 0.2 to 0.35.

The secondary battery with I_{D}/I_{G} of the active material in the first region and I_{D}/I_{G} of the active material in the second region within suitable ranges can better improve the cycling stability and kinetic performance of the battery.

In any of embodiments of the present disclosure, the particle size distribution (Dv90-Dv10)/Dv50 of the active material in the second region is greater than the particle size distribution (Dv90-Dv10)/Dv50 of the active material in the first region.

In the negative electrode plate, the active material in the second region away from the current collector having a relatively broader particle size distribution is beneficial for electrolyte solution infiltration within the negative electrode plate, improving the kinetic performance. Conversely, the active material in the first region close to the current collector having a relatively narrower particle size distribution is beneficial for the formation of a closely packed negative electrode active material, improving the compaction density of the negative electrode plate. In other words, for the negative electrode plate, achieving the same compaction density requires a lower cold pressing pressure, reducing the probability of cracking in the active material in the cold pressing process, further improving the integrity of the active material during processing, and improving the cycling stability of the battery.

In any of embodiments of the present disclosure, the degree of graphitization of the active material in the second region is lower than the degree of graphitization of the active material in the first region.

Active materials with a low degree of graphitization typically exhibit a larger interlayer spacing, which is beneficial for the deintercalation of active ions. The active material in the second region on the side of the negative electrode plate away from the current collector has a low degree of graphitization, which helps to improve the kinetic performance of the battery, simultaneously reduce the volume expansion of the electrode plate caused by active ion deintercalation, and comprehensively improve the cycling stability of the battery.

In any of embodiments of the present disclosure, the proportion of the number of primary particles of the active material in the second region is higher than the proportion of the number of primary particles of the active material in the first region.

The second region on the side of the negative electrode plate away from the current collector has a higher primary particle content, which helps to improve the particle integrity of the electrode plate in the cold pressing process, reduce the formation of new interfaces, reduce the consumption of active lithium in the cycling process, and further improve the cycling stability of the secondary battery.

In any of embodiments of the present disclosure, the active material in the first region includes a first graphite material. A first particle body of the first graphite material includes an internal region and a surface region that at least partially surrounds the internal region. The surface region refers to a region formed by extending a distance of 30 nm from the surface of the first particle body of the first graphite material towards the inside of the particle. The surface region includes a disordered layer.

In any of embodiments of the present disclosure, the thickness of the disordered layer is 1 nm to 20 nm.

Unlike the active material where a disordered layer is coated onto the surface of the graphite particle body, the disordered layer of the first graphite material is a part of the particle body. That is, the disordered layer structure in the surface region of the first graphite material and other parts of the first graphite material are derived from the same precursor, making the disordered layer of the first graphite material have high uniformity and extremely small thickness, such that the first graphite material has relatively low I_{D}/I_{G} while having a disordered layer.

The disordered layer primarily includes amorphous carbon. Carbon atoms in the amorphous carbon structure lack a regular arrangement, such that the intermolecular interaction is more complex, causing higher strength and hardness compared to the graphite crystals in the internal region, reducing the probability of surface damage to the graphite particles caused by friction between particles and between particles and a mixing vessel during slurry preparation, reducing the risk of cracking and exposure of new interfaces of the negative electrode active material particles in the cold pressing process of the electrode plate, and making the graphite material maintain higher integrity in the manufacturing process. Graphite materials with high particle integrity have fewer surface defects and exhibit a favorable interface with the electrolyte solution, which can effectively reduce side reactions between the negative electrode plate and the electrolyte solution, minimize the loss of active lithium, and improve the cycling stability of the battery. In addition, the first graphite material does not sacrifice the capacity of the graphite material or the energy density of the battery due to an excessively disordered surface layer, which can improve the energy density of the battery while improving the cycling stability of the battery.

In any of embodiments of the present disclosure, the active material in the second region includes a second graphite material. The second graphite material includes a second particle body and a coating layer at least partially coated on the surface of the second particle body. The coating layer includes amorphous carbon.

The coating layer on the surface of the second graphite material can significantly increase the degree of surface disorder of the active material in the second region. The highly disordered surface of the second graphite material facilitates the deintercalation of active ions and reduces the volume expansion in the deintercalation process of the active ions, further improving the kinetic performance of the battery.

In any of embodiments of the present disclosure, the powder compaction density of the second graphite material under a pressure of 49,000 N is 1.60 g/cm³ to 1.80 g/cm³.

Graphite materials with high degree of surface disorder often have high surface strength and hardness, making it difficult to compact under pressure and causing low powder compaction density. The second graphite material maintains high powder compaction density while having high degree of surface disorder, thus helping to improve the ultimate compaction density of the electrode plate and further improve the energy density of the battery.

In any of embodiments of the present disclosure, the specific surface area of the first graphite material is 1.0 m²/g to 1.8 m²/g, optionally 1.1 m²/g to 1.7 m²/g.

The low specific surface area of the first graphite material helps to further reduce the degree of side reactions in the active material and improve the cycle life of the secondary battery.

In any of embodiments of the present disclosure, the volume-based particle size Dv50 of the first graphite material is 7.0 µm to 14.0 µm, optionally 8.0 µm to 12.0 µm.

In any of embodiments of the present disclosure, the particle size distribution (Dv90-Dv10)/Dv50 of the first graphite material is 1.0 to 1.4, optionally 1.1 to 1.3.

Controlling the particle size distribution of the first graphite material within the above range facilitates the formation of a densely packed negative electrode active material, increasing the compaction density of the negative electrode plate. In other words, for the negative electrode plate, achieving the same compaction density requires a lower cold pressing pressure, which in turn reduces the probability of active material cracking in the cold pressing process and further improve the integrity of the active material during processing. In addition, the small internal stress within the first graphite material particles helps to maintain a long-term stable pore channel structure within the electrode plate during cycling, maintain the original pore structure of the electrode plate in the cycling process, ensure smooth lithium-ion intercalation path, reduce the re-formation of the film on the negative electrode active material in the charging process, and improve the kinetic performance and cycle life. Further, the particle size distribution within the above range can also improve the uniformity of lithium intercalation between particles, reduce polarization, avoid lithium plating caused by uneven current density, and help to achieve long-term cycling stability. In addition, the particle size distribution within the above range can also help to improve the processing characteristics of the electrode plate, prevent an excessive number of fine particles in the first graphite material from compromising the homogeneity of the slurry during mixing, improve the quality uniformity and stability of the electrode plate, and achieve long-cycling stability.

In any of embodiments of the present disclosure, the gravimetric capacity of the first graphite material is 345 mAh/g to 355 mAh/g, optionally 347 mAh/g to 353 mAh/g.

The first graphite material, with the gravimetric capacity within the above range, neither undergoes significant lattice expansion in the charging and discharging process due to an excessively high degree of graphitization of the first graphite material, nor suffers from the difficulty in compaction associated with an excessively low degree of graphitization of the first graphite material. This avoids the need for higher cold pressing pressure to achieve the same electrode plate compaction density, which could otherwise lead to the fracture during cold pressing, the generation of new interfaces during cycling, and the consumption of excessive active lithium. Through the improvement in the above two aspects, the cycle life of the secondary battery is comprehensively improved.

In any of embodiments of the present disclosure, the powder compaction density of the first graphite material under a pressure of 49,000 N is less than or equal to 1.85 g/cm³, optionally from 1.78 g/cm³ to 1.85 g/cm³.

The first graphite material has a high powder compaction density, helping to improve the compaction density of the electrode plate and improve the energy density of the secondary battery.

In any of embodiments of the present disclosure, the volume-based particle size Dv50 of the graphite material is denoted as A. The volume-based particle size Dv50 of the graphite material after cold pressing under a pressure of 20,000 N is denoted as B. Then the graphite material satisfies: B/A≥85%, optionally 85% to 98%.

In any of embodiments of the present disclosure, the proportion of the number of primary particles in the first graphite material is 40% to 60%, optionally 50% to 60%.

In any of embodiments of the present disclosure, the degree of graphitization of the first graphite material is 88% to 95%.

In any of embodiments of the present disclosure, the volume-based particle size Dv50 of the second graphite material is less than or equal to 15.0 µm, optionally 9.0 µm to 14.0 µm.

The second graphite material has a small volume-based particle size Dv50, such that the intercalation and deintercalation path of the active ions are short, improving the transport performance of the active ions and electrons, and improving the kinetic performance of the battery.

In any of embodiments of the present disclosure, the tap density of the second graphite material is 1.0 g/cm³ to 1.3 g/cm³.

A second graphite material with a tap density within the above range can further improve the electron conduction between particles and improve the kinetic performance of the battery.

In any of embodiments of the present disclosure, the specific surface area of the second graphite material is 0.75 m²/g to 1.75 m²/g.

The second graphite material with a specific surface area within a suitable range provides suitable adsorption sites, which can facilitate the adsorption of the active ions, further improving the kinetic performance of the secondary battery, reducing the probability of side reactions with the electrolyte solution, and balancing the cycling performance and kinetic performance of the battery.

In any of embodiments of the present disclosure, the proportion of the number of primary particles in the second graphite material is greater than or equal to 80%.

Primary particles have excellent structural stability, helping to reduce the breakage of graphite particles of the graphite material caused by expansion and contraction in the cycling process of the second graphite material, improve the stability of the second graphite material, reduce the irreversible consumption of the active ions, and improve the cycling performance of the secondary battery.

In any of embodiments of the present disclosure, the degree of graphitization of the second graphite material is 85% to 90%.

A second graphite material with a degree of graphitization within the above range can balance the cycling stability, gravimetric capacity, and active ion transport performance of the material, helping to obtain a battery with high energy density, long cycle life, and high kinetic performance.

In any of embodiments of the present disclosure, the particle size distribution (Dv90-Dv10)/Dv50 of the second graphite material is 1.20 to 1.70.

The second graphite material with a volume-based particle size distribution within a suitable range helps to enable the negative electrode film layer to have suitable pore structures, reducing the resistance to ion transport in the liquid phase and improving the kinetic performance of the secondary battery. In addition, the second graphite material can also exhibit good packing performance, helping to improve the compaction density of the negative electrode film layer, further improving the energy density of the secondary battery.

In any of embodiments of the present disclosure, the gravimetric capacity of the second graphite material is 325 mAh/g to 340 mAh/g.

A second graphite material with a gravimetric capacity within the above range exhibits a relatively low lattice expansion rate and high crystal structural stability, reducing the cycling expansion and full-charge expansion of the battery, and further improving the cycling stability of the secondary battery.

A second aspect of the present disclosure provides a power consuming apparatus, which includes the secondary battery according to the first aspect of the present disclosure.

### BRIEF DESCRIPTION OF THE DRAWINGS

In order to describe the technical solutions of the examples of the present disclosure more clearly, the drawings required for use in the examples of the present disclosure will be introduced briefly below. Clearly, the drawings described below are only some embodiments of the present disclosure. Those skilled in the art can also obtain other drawings according to the drawings without contributing any inventive labor.
FIG. 1 is a schematic diagram of a negative electrode plate according to an embodiment of the present disclosure;
FIG. 2 is a schematic diagram of a negative electrode plate according to another embodiment of the present disclosure;
FIG. 3 is a schematic diagram of a negative electrode plate according to yet another embodiment of the present disclosure;
FIG. 4 is a schematic diagram of a cross section image of a particle of a first graphite material according to the present disclosure;
FIG. 5 is a schematic diagram of a secondary battery according to an embodiment of the present disclosure;
FIG. 6 is a schematic exploded view of a secondary battery according to an embodiment of the present disclosure;
FIG. 7 is a schematic diagram of a battery module according to an embodiment of the present disclosure;
FIG. 8 is a schematic diagram of a battery pack according to an embodiment of the present disclosure;
FIG. 9 is a schematic exploded view of the battery pack shown in FIG. 8;
FIG. 10 is a schematic diagram of a power consuming apparatus using a secondary battery as a power supply according to an embodiment of the present disclosure;
FIG. 11 is a Raman surface scanning image of a first region of an electrode plate according to an embodiment of the present disclosure; and
FIG. 12 is a Raman surface scanning image of a second region of an electrode plate according to an embodiment of the present disclosure.

The drawings may not be drawn to the actual scale. Description of reference signs: 1-battery pack; 2-upper box; 3-lower box; 4-battery module; 5-secondary battery; 51-case; 52-electrode assembly; 53-cover plate; 10-negative electrode plate; 101-negative electrode current collector; 102-negative electrode film layer; 102a-first surface; 102b-second surface; 1021-first region; 1022-second region; 1023-middle region; 200-first graphite material; 201-surface region; and 202-internal region.

### DETAILED DESCRIPTION

Embodiments of a secondary battery and a power consuming apparatus of the present disclosure will be specifically disclosed below with reference to the drawings as appropriate. However, there may be situations where unnecessary detailed descriptions are omitted. For example, there may be situations where detailed descriptions of well-known matters and repeated descriptions of actually the same structure are omitted, for the purpose of preventing the following descriptions from becoming unnecessarily lengthy, and helping to understand by those skilled in the art. In addition, the drawings and subsequent descriptions are provided for those skilled in the art to fully understand the present disclosure and are not intended to limit the subject matters defined in the claims.

Any "range" disclosed in the present disclosure is defined by a lower limit and an upper limit. A given range is defined by selecting a lower limit and an upper limit. The selected lower limit and upper limit define boundaries of the particular range. The range defined in this way may include or exclude end values, and may be arbitrarily combined, that is, any lower limit may be combined with any upper limit to form a new range. For example, if ranges 60 to 120 and 80 to 110 are listed for a particular parameter, it is to be understood that ranges of 60 to 110 and 80 to 120 are also expectable. Additionally, if the minimum range values 1 and 2 and the maximum range values 3, 4 and 5 are listed, the following ranges are all expectable: 1 to 3, 1 to 4, 1 to 5, 2 to 3, 2 to 4, and 2 to 5. In the present disclosure, unless otherwise stated, the numerical range "from a to b" represents an abbreviated representation of any combination of real numbers between a and b, where both a and b are real numbers. For example, the numerical range "0 to 5" means that all real numbers between 0 and 5 are listed herein, and "0 to 5" is merely an abbreviated representation of the combination of these numbers. In addition, when a parameter is expressed as an integer ≥2, it is equivalent to disclosing that the parameter is, for example, and integer such as 2, 3, 4, 5, 6, 7, 8, 9, 10, 11, 12, or the like.

Unless otherwise specified, all the embodiments and optional embodiments of the present disclosure may be combined with each other to form new technical solutions, and such technical solutions should be considered to be included in the disclosed content of the present disclosure.

Unless otherwise specified, all the technical features and optional technical features of the present disclosure may be combined with each other to form new technical solutions, and such technical solutions should be considered to be included in the disclosed content of the disclosure application.

Unless otherwise specified, all steps in the present disclosure may be performed sequentially or randomly, and preferably, sequentially. For example, "the method including steps (a) and (b)" represents that the method may include steps (a) and (b) performed sequentially, or may include steps (b) and (a) performed sequentially. For example, "the method may further include step (c)" represents that step (c) may be added to the method in any order. For example, the method may include steps (a), (b) and (c), or steps (a), (c) and (b), or steps (c), (a) and (b), or the like.

Unless otherwise specified, the terms such as "include", "comprise", and their variants mentioned in the present disclosure may be open-ended or closed-ended. For example, the terms "comprise" and "include" may indicate that other components not listed may further be comprised or included, or only listed components may be comprised or included.

Unless otherwise specified, the term "or" is inclusive in the present disclosure. For example, the phrase "A or B" represents "A, B, or both A and B". More specifically, any one of the following conditions satisfies the condition "A or B": A is true (or present) and B is false (or not present); A is false (or not present) and B is true (or present); or both A and B are true (or present).

Unless otherwise specially stated, the terms used in the present disclosure have well-known meanings as commonly understood by those skilled in the art.

Unless otherwise specifically stated, the values of the parameters mentioned in the present disclosure may be determined by various test methods commonly used in the art. For example, they may be determined according to the test methods given in the present disclosure.

Unless otherwise specially stated, in the present disclosure, the term "active ions" refers to ions that can be intercalated and deintercalated back and forth between the positive electrode and the negative electrode of the secondary battery, including but not limited to lithium ions.

In the present disclosure, the term "multiple" or "a plurality of" indicates two or more.

The capacity and electrochemical performance of the negative electrode active material are often related to its degree of surface disorder. The negative electrode active material with a low degree of surface disorder usually has higher capacity and compaction density, such that the battery has high energy density. However, due to its low degree of surface disorder, the crystal interlayer spacing is small, such that the lattice expansion rate of the negative electrode active material during cycling is large, the cycle life of the battery is shortened, it is difficult for the active ions in the electrolyte solution to achieve intercalation, and the kinetic performance of the secondary battery is poor.

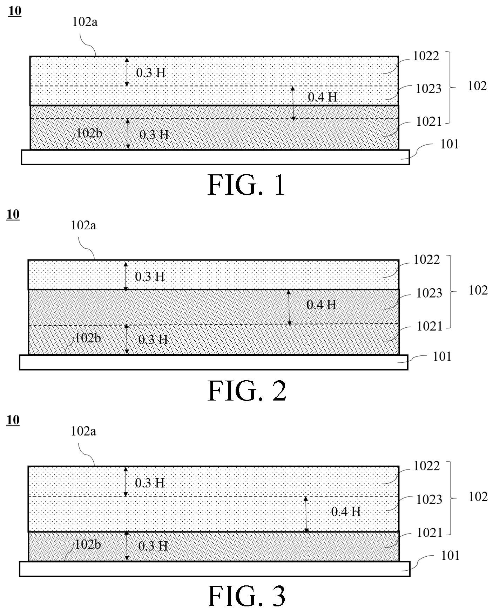

Based on this, the present disclosure provides a secondary battery, which includes a negative electrode plate. FIG. 1 to FIG. 3 are schematic diagrams of negative electrode plates according to embodiments of the present disclosure. As shown in FIG. 1 to FIG. 3, the negative electrode plate 10 includes a negative electrode current collector 101 and a negative electrode film layer 102 formed on at least one surface of the negative electrode current collector 101. The negative electrode film layer 102 has a first surface 102a distant from the negative electrode current collector 101 and a second surface 102b arranged opposite to the first surface 102a. The thickness of the negative electrode film layer 102 is denoted as H. A region within a thickness range from the second surface 102b to 0.3 H of the negative electrode film layer is denoted as a first region 1021 of the negative electrode film layer. A region within a thickness range from the first surface 102a to 0.3 H of the negative electrode film layer is denoted as a second region 1022 of the negative electrode film layer. I_{D}/I_{G} of an active material in the second region 1022 is greater than I_{D}/I_{G} of an active material in the first region 1021. I_{D}/I_{G} is a ratio of D peak intensity to G peak intensity of a Raman spectrum. I_{D} represents the D peak intensity of the Raman spectrum at 1,350±100 cm⁻¹. I_{G} represents the G peak intensity of the Raman spectrum at 1,580±100 cm⁻¹. The thickness H of the negative electrode film layer is a thickness of the negative electrode film layer located on a single side of the negative electrode current collector.

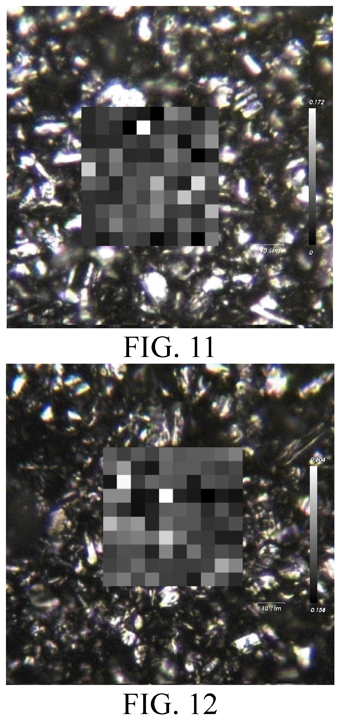

I_{D}/I_{G} in Raman spectra of different regions may be determined by using any known method in the art. In the present disclosure, determination is performed according to GB/T 40219-2021 by adopting a LabRAM HR Evolution laser micro-Raman spectrometer. A solid-state laser with a wavelength of 523 nm is adopted as a light source, with a beam diameter of 1.2 µm and a power of 1 mW. 100 points are sampled within a 100 µm×100 µm region. A ratio I_{D}/I_{G} of the peak intensity I_{D} at 1,350±100 cm⁻¹ to the peak intensity I_{G} at 1,580±100 cm⁻¹ is calculated for each point. A median of I_{D}/I_{G} values at these 100 points is taken as I_{D}/I_{G} of the graphite material. FIG. 11 is a Raman surface scanning image of a first region of an electrode plate according to an embodiment of the present disclosure. FIG. 12 is a Raman surface scanning image of a second region of an electrode plate according to an embodiment of the present disclosure. From the figures, it can be seen that in some embodiments, the active material in the second region has a higher I_{D}/ I_{G} and a wider distribution range.

In some embodiments, I_{D/}I_{G} of the active material in the second region is greater than I_{D/}I_{G} of the active material in the first region. In the present disclosure, the thickness of the negative electrode film layer may be determined by adopting a method known in the art. As an example, determination is performed by adopting a micrometer (e.g., Mitutoyo293-100, with an accuracy of 0.1 µm).

I_{D}/I_{G} of the Raman spectrum may be used for characterizing the degree of disorder on the surface of the active material. It can be understood that the first region and the second region each include at least one active material. I_{D}/I_{G} of the active material in the second region 1022 being greater than I_{D}/I_{G} of the active material in the first region 1021 does not mean that I_{D}/I_{G} of the active material in the second region 1022 must be greater than I_{D}/I_{G} of any active material in the first region 1021. I_{D}/I_{G} of the active material in the second region 1022 away from the current collector in the negative electrode plate being greater than I_{D}/I_{G} of the active material in the first region 1021 means that the active material in the second region on an outer side of the electrode plate has a higher average degree of disorder than the active material in the first region. In materials with a high degree of disorder, the active ions can be intercalated into and deintercalated from the active material more easily, thus effectively reducing volume expansion in an ion intercalation/deintercalation process, and improving the cycling performance of the battery. Simultaneously, the electrolyte solution can also wet the active material more readily, improving the kinetic performance of the battery. I_{D}/I_{G} of the active material in the first region 1021 close to the current collector in the negative electrode plate is lower, such that the active material has higher capacity and can be more easily compacted in a cold pressing process, improving the compaction density of the electrode plate, and enabling the secondary battery to have high energy density. Compared to a single-layer electrode plate prepared by simply mixing active materials with different I_{D}/I_{G}, the dual-layer design can achieve the same battery energy density with a reduced negative electrode film layer thickness, further overcoming the problems associated with excessive negative electrode film layer thickness, such as elongated transport path and degradation of battery kinetics. Therefore, this secondary battery can have improved cycling stability and kinetic performance while simultaneously maintaining high energy density.

In some embodiments, a difference ΔK between I_{D}/I_{G} of the active material in the second region and I_{D}/I_{G} of the active material in the first region satisfies: 0<Δ*K*≤0.4, optionally 0.1≤Δ*K*≤0.25.

In some embodiments, the difference ΔK between I_{D}/I_{G} of the active material in the second region and I_{D}/I_{G} of the active material in the first region is 0.01, 0.03, 0.06, 0.09, 0.12, 0.15, 0.18, 0.20, 0.23, 0.25, 0.30, 0.35, 0.40, or within a numerical range between any two thereof.

A secondary battery with a difference ΔK between I_{D}/I_{G} of the active material in the second region and I_{D}/I_{G} of the active material in the first region within the above range can more effectively balance the cycling stability, kinetic performance, and battery capacity of the battery.

In some embodiments, I_{D}/I_{G} of the active material in the first region is less than or equal to 0.14, optionally 0.05 to 0.1; and/or, I_{D}/I_{G} of the active material in the second region is greater than or equal to 0.1, optionally 0.2 to 0.35.

In some embodiments, I_{D}/I_{G} of the active material in the first region is optionally 0.01, 0.03, 0.06, 0.09, 0.1, 0.14, or within a numerical range between any two thereof.

In some embodiments, I_{D}/I_{G} of the active material in the second region is optionally 0.1, 0.13, 0.16, 0.19, 0.22, 0.25, 0.35, or within a numerical range between any two thereof.

The secondary battery with I_{D}/I_{G} of the active material in the first region and I_{D}/I_{G} of the active material in the second region within suitable ranges can better improve the cycling stability and kinetic performance of the battery.

In some embodiments, the particle size distribution (Dv90-Dv10)/Dv50 of the active material in the second region is greater than the particle size distribution (Dv90-Dv10)/Dv50 of the active material in the first region.

Herein, the terms "Dv90" and "Dv10" respectively refer to the particle sizes corresponding to the cumulative volume distribution of particles reaching 90% and 10% in a particle size distribution curve.

Herein, the volume-based particle sizes Dv90 and Dv10 of the material may be determined by adopting any method known in the art. As an example, determination is performed with reference to GB/T 19077-2016 by adopting a laser particle size analyzer. A testing instrument may be Mastersizer 3000 laser particle size analyzer from Malvern Instruments Limited in the UK.

In the negative electrode plate, the active material in the second region 1022 away from the current collector has a relatively broader particle size distribution, which is beneficial for electrolyte solution infiltration within the negative electrode plate, improving the kinetic performance. Conversely, the active material in the first region 1021 close to the current collector has a relatively narrower particle size distribution, which is beneficial for the formation of a closely packed negative electrode active material structure, improving the compaction density of the negative electrode plate. In other words, for the negative electrode plate, achieving the same compaction density requires a lower cold pressing pressure, reducing the probability of cracking in the active material in the cold pressing process, further improving the integrity of the active material during processing, and improving the cycling stability of the battery.

In some embodiments, the degree of graphitization of the active material in the second region is lower than the degree of graphitization of the active material in the first region.

Herein, the term "degree of graphitization" refers to an indicator that measures the extent to which carbon atoms form a closely packed hexagonal graphite crystal structure.

In the present disclosure, the degree of graphitization of the active material may be determined by adopting any method known in the art. As an example, an X-ray diffractometer (such as BrukerD8Discover) is used for determination with reference to JISK0131-1996 and JB/T4220-2011 to obtain the average interlayer spacing d002 of the (002) crystal plane in the graphite material crystal structure. Then, the degree of graphitization is calculated according to the formula g=(0.344-d002)/(0.344-0.3354)×100%. In the above formula, d002 is the average interlayer spacing of the (002) crystal plane in the graphite material crystal structure, expressed in nanometers (nm).

Active materials with a low degree of graphitization typically exhibit a larger interlayer spacing, which is beneficial for the deintercalation of active ions. The active material in the second region on the side of the negative electrode plate away from the current collector has a low degree of graphitization, which helps to improve the kinetic performance of the battery, simultaneously reduce the volume expansion of the electrode plate caused by active ion deintercalation, and comprehensively improve the cycling stability of the battery.

In some embodiments, the proportion of the number of primary particles of the active material in the second region is higher than the proportion of the number of primary particles of the active material in the first region.

Herein, the term "primary particles" refers to initial particles formed during the processing of graphite raw materials. Primary particles are particles in a non-agglomerated state.

In the present disclosure, the proportion of the number of primary particles in the active material may be determined by adopting any method known in the art. As an example, a cross section of the negative electrode plate may be prepared by adopting a cross-section polisher (e.g., IB-09010 CP argon ion cross-section polisher from JEOL (Japan)). Then, with reference to JY/T 010-1996, the cross section of the negative electrode plate is scanned by using a scanning electron microscope (e.g., Sigma 300 scanning electron microscope from ZEISS (Germany)). Multiple test regions are randomly selected within this test sample. Images of the multiple test regions are acquired by adopting the scanning electron microscope. The proportion of the number of active material particles exhibiting primary particle morphology relative to the total number of active material particles is counted in each image. The average value of these multiple statistical results is then taken as the proportion of the number of primary particles in the active material.

The second region on the side of the negative electrode plate away from the current collector has a higher primary particle content, which helps to improve the particle integrity of the electrode plate in the cold pressing process, reduce the formation of new interfaces, reduce the consumption of active lithium in the cycling process, and further improve the cycling stability of the secondary battery.

In some embodiments, the active material in the first region includes a first graphite material. A first particle body of the first graphite material includes an internal region and a surface region that at least partially surrounds the internal region. The surface region refers to a region formed by extending a distance of 30 nm from the surface of the first particle body of the first graphite material towards the inside of the particle. The surface region includes a disordered layer.

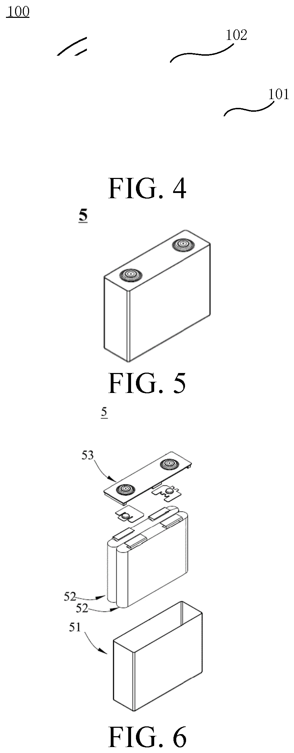

FIG. 4 is a schematic diagram of a cross section image of a particle of a first graphite material 200 according to the present disclosure. As shown in FIG. 4, a region extending from a first particle body surface of the first graphite material 200 inwards to a depth of 30 nm is defined as a surface region 201. A region on an inner side of the surface region 201 is defined as an internal region 202. The surface region 201 includes a disordered layer.

The carbon material in the disordered layer may be characterized through Transmission Electron Microscopy (TEM) testing. A slice with a thickness of about 100 nm is excised from the graphite material particle body by using a Focused Ion Beam (FIB). Then, TEM testing is performed on the slice. It can be observed that the surface region includes a disordered layer where lattice fringes exhibit long-range disorder and short-range order. The electron diffraction pattern at the disordered layer appears as a diffuse halo.

In some embodiments, the thickness of the disordered layer is 1 nm to 20 nm.

In the present disclosure, the thickness of the disordered layer may be determined by adopting any method known in the art. As an example, it may be obtained through Transmission Electron Microscopy (TEM) testing. A slice with a thickness of about 100 nm is excised from the center of graphite material particle body through Focused Ion Beam (FIB). Then, TEM testing is performed on the slice to obtain an original TEM test image. The original image is saved in a format of xx.dm3. The original image obtained from TEM testing is opened in Digital Micrograph software. The disordered layer is identified based on lattice spacing, angle information, and diffraction pattern.

In some embodiments, the thickness of the disordered layer is 1 nm, 4 nm, 5 nm, 8 nm, 10 nm, 12 nm, 15 nm, 16 nm, 20 nm, or within a numerical range between any two thereof.

Unlike the active material where a disordered layer is coated onto the surface of the graphite particle body, the disordered layer of the first graphite material is a part of the particle body. That is, the disordered layer structure in the surface region of the first graphite material and other parts of the first graphite material are derived from the same precursor, making the disordered layer of the first graphite material have high uniformity and extremely small thickness, such that the first graphite material has relatively low I_{D}/I_{G} while having a disordered layer.

The disordered layer primarily includes amorphous carbon. Carbon atoms in the amorphous carbon structure lack a regular arrangement, such that the intermolecular interaction is more complex, causing higher strength and hardness compared to the graphite crystals in the internal region, reducing the probability of surface damage to the graphite particles caused by friction between particles and between particles and a mixing vessel during slurry preparation, reducing the risk of cracking and exposure of new interfaces of the negative electrode active material particles in the cold pressing process of the electrode plate, and making the graphite material maintain higher integrity in the manufacturing process. Graphite materials with high particle integrity have fewer surface defects and exhibit a favorable interface with the electrolyte solution, which can effectively reduce side reactions between the negative electrode plate and the electrolyte solution, minimize the loss of active lithium, and improve the cycling stability of the battery. In addition, the first graphite material does not sacrifice the capacity of the graphite material or the energy density of the battery due to an excessively disordered surface layer, which can improve the energy density of the battery while improving the cycling stability of the battery.

In some embodiments, the active material in the second region includes a second graphite material. The second graphite material includes a second particle body and a coating layer at least partially coated on the surface of the second particle body. The coating layer includes amorphous carbon.

Herein, the term "amorphous carbon" refers to a non-crystalline allotropic form of carbon. Due to its hybrid structure of sp³ and sp² hybridization, it differs from crystalline forms of carbon. This structure grants it properties and a structure analogous to amorphous solids, such as glass.

Herein, the amorphous carbon may be formed via carbonization treatment of an organic carbon source. The organic carbon source may be any carbon-containing material known in the art that is suitable for coating. For example, it may include one or more of coal pitch, petroleum pitch, phenolic resin, coconut shell, and the like.

In the present disclosure, the morphology of the second graphite material may be characterized through Transmission Electron Microscopy (TEM).

The coating layer on the surface of the second graphite material can significantly increase the degree of surface disorder of the active material in the second region. The highly disordered surface of the second graphite material facilitates the deintercalation of active ions and reduces the volume expansion in the deintercalation process of the active ions, further improving the kinetic performance of the battery.

In some embodiments, the powder compaction density of the second graphite material under a pressure of 49,000 N is 1.60 g/cm³ to 1.80 g/cm³.

In some embodiments, the powder compaction density of the second graphite material under a pressure of 49,000 N is 1.60 g/cm³, 1.65 g/cm³, 1.70 g/cm³, 1.75 g/cm³, 1.80 g/cm³, or within a numerical value between any two thereof.

Herein, the term "powder compaction density" refers to the density of powder to be tested under a predetermined pressure. The higher the powder compaction density, the greater the mass of the powder material per unit volume. For the graphite material, the higher the powder compaction density, the higher the compaction density of the negative electrode film layer, and the more conducive to improving the energy density of the secondary battery.

The powder compaction density may be measured by using any method known in the art. As an example, with reference to GB/T 24533-2009, 1 g of graphite material powder is weighed and placed into a mold with a base area of 1.327 cm². A specific pressure, e.g., 49,000 N, is applied and maintained for 30 s, followed by pressure release and a holding time of 10 s. The powder compaction density of the graphite material at the selected pressure is determined through an electronic universal testing machine (e.g., a UTM7305 electronic universal testing machine).

Graphite materials with high degree of surface disorder often have high surface strength and hardness, making it difficult to compact under pressure and causing low powder compaction density. The second graphite material maintains high powder compaction density while having high degree of surface disorder, thus helping to improve the ultimate compaction density of the electrode plate and further improve the energy density of the battery.

In some embodiments, the specific surface area of the first graphite material is 1.0 m²/g to 1.8 m²/g, optionally 1.1 m²/g to 1.7 m²/g.

In the present disclosure, the specific surface area of the active material may be determined by using any method known in the art. As an example, with reference to GB/T 19587-2017, determination is performed by adopting a nitrogen adsorption specific surface area analysis method, and then calculation is performed by adopting a Brunauer Emmett Teller (BET) method. The test instrument may be a Tri-Star 3020 type specific surface area and pore size analysis tester available from Micromeritics company, the United States.

In some embodiments, the specific surface area of the first graphite material is 1.0 m²/g, 1.1 m²/g, 1.2 m²/g, 1.3 m²/g, 1.4 m²/g, 1.5 m²/g, 1.6 m²/g, 1.7 m²/g, 1.8 m²/g, or within a numerical range between any two thereof.

The low specific surface area of the first graphite material helps to further reduce the degree of side reactions in the active material and improve the cycle life of the secondary battery.

In some embodiments, the volume-based particle size Dv50 of the first graphite material is 7.0 µm to 14.0 µm, optionally 8.0 µm to 12.0 µm.

In some embodiments, the volume-based particle size Dv50 of the first graphite material is 7.0 µm, 8.0 µm, 9.0 µm, 10.0 µm, 11.0 µm, 12.0 µm, or within a numerical range between any two thereof.

In some embodiments, the particle size distribution (Dv90-Dv10)/Dv50 of the first graphite material is 1.0 to 1.4, optionally 1.1 to 1.3.

In some embodiments, the particle size distribution (Dv90-Dv10)/Dv50 of the first graphite material is 1.0, 1.05, 1.1, 1.15, 1.2, 1.25, 1.3, or within a numerical range between any two thereof.

Controlling the particle size distribution of the first graphite material within the above range facilitates the formation of a densely packed negative electrode active material, increasing the compaction density of the negative electrode plate. In other words, for the negative electrode plate, achieving the same compaction density requires a lower cold pressing pressure, which in turn reduces the probability of active material cracking in the cold pressing process and further improve the integrity of the active material during processing. In addition, the small internal stress within the first graphite material particles helps to maintain a long-term stable pore channel structure within the electrode plate during cycling, maintain the original pore structure of the electrode plate in the cycling process, ensure smooth lithium-ion intercalation path, reduce the re-formation of the film on the negative electrode active material in the charging process, and improve the kinetic performance and cycle life. Further, the particle size distribution within the above range can also improve the uniformity of lithium intercalation between particles, reduce polarization, avoid lithium plating caused by uneven current density, and help to achieve long-term cycling stability. In addition, the particle size distribution within the above range can also help to improve the processing characteristics of the electrode plate, prevent an excessive number of fine particles in the first graphite material from compromising the homogeneity of the slurry during mixing, improve the quality uniformity and stability of the electrode plate, and achieve long-cycling stability.

In some embodiments, the gravimetric capacity of the first graphite material is 345 mAh/g to 355 mAh/g, optionally 347 mAh/g to 353 mAh/g.

Herein, the term "gravimetric capacity" refers to the ratio of the electric capacity that can be released by the active material to the mass of the active material.

In the present disclosure, the gravimetric capacity of the graphite material may be determined by adopting any method known in the art. As an example, a graphite material sample may be thoroughly mixed with a conductive agent carbon black and polyvinylidene fluoride (PVDF) in a suitable amount of solvent NMP at a mass ratio of 91.6:1.8:6.6 to form a uniform negative electrode slurry. The negative electrode slurry is evenly coated onto the surface of the negative electrode current collector copper foil at a weight ratio, and dried, and cold-pressed. Then, a metal lithium plate is used as a counter electrode, a polypropylene (PP) film is used as a separator, and an electrolyte solution is filled. An electrolyte solution formula adopted is as follows: dimethyl carbonate (DMC), ethyl methyl carbonate (EMC), and ethylene carbonate (EC) are mixed of 1:1:1 to obtain an organic solvent, and then LiPF₆ is dissolved in the organic solvent to prepare the electrolyte solution with a concentration of 1.0 mol/L. A CR2430 button battery is obtained by assembling in an argon-filled glove box. At 25°C, the prepared button battery is discharged at a constant current of 0.05C to 0.005 V first, then continuously discharged at a constant current of 10 µA to 0.005 V, and allowed to stand for 5 min. The first-cycle discharging capacity of the button battery is recorded. Then, the button battery is charged at a constant current of 0.1C to 2.0 V. The charging capacity of the button battery is recorded. A ratio of the charging capacity of the button battery to the mass of the graphite material sample is the gravimetric capacity of the graphite material.

In some embodiments, the gravimetric capacity of the first graphite material is 345 mAh/g, 346 mAh/g, 347 mAh/g, 348 mAh/g, 349 mAh/g, 350 mAh/g, 351 mAh/g, 352 mAh/g, 353 mAh/g, 354 mAh/g, 355 mAh/g, or within a numerical range between any two thereof.

The first graphite material, with the gravimetric capacity within the above range, neither undergoes significant lattice expansion in the charging and discharging process due to an excessively high degree of graphitization of the first graphite material, nor suffers from the difficulty in compaction associated with an excessively low degree of graphitization of the first graphite material. This avoids the need for higher cold pressing pressure to achieve the same electrode plate compaction density, which could otherwise lead to the fracture during cold pressing, the generation of new interfaces during cycling, and the consumption of excessive active lithium. Through the improvement in the above two aspects, the cycle life of the secondary battery is comprehensively improved.

In some embodiments, the powder compaction density of the first graphite material under a pressure of 49,000 N is less than or equal to 1.85 g/cm³, optionally from 1.78 g/cm³ to 1.85 g/cm³.

The first graphite material has a high powder compaction density, helping to improve the compaction density of the electrode plate and improve the energy density of the secondary battery.

In some embodiments, the volume-based particle size Dv50 of the graphite material is denoted as A. The volume-based particle size Dv50 of the graphite material after cold pressing under a pressure of 20,000 N is denoted as B. Then the graphite material satisfies: B/A≥85%, optionally 85% to 98%.

Herein, "cold pressing" refers to a pressure processing method performed at room temperature. A ratio of the powder's Dv50 before and after cold pressing may be calculated as the Dv50 of the powder divided by the Dv50 of the powder scraped from the electrode plate after cold pressing.

In some embodiments, A/B is optionally 85%, 86%, 87%, 88%, 89%, 90%, 91%, 92%, 93%, 94%, 95%, 96%, 97%, 98%, 99%, 100%, or within a numerical range between any two thereof.

In some embodiments, the proportion of the number of primary particles in the first graphite material is 40% to 60%, optionally 50% to 60%.

In some embodiments, the proportion of the number of primary particles in the first graphite material is 40%, 45%, 50%, 55%, 60%, or within a numerical range between any two thereof.

In some embodiments, the degree of graphitization of the first graphite material is 88% to 95%.

In some embodiments, the degree of graphitization of the first graphite material is 88%, 89%, 90%, 91%, 92%, 93%, 94%, 95%, or within a numerical range between any two thereof.

In some embodiments, I_{D}/I_{G} of the first graphite material is 0.05 to 0.1. I_{D} represents the D peak intensity of a Raman spectrum at 1,350±100 cm⁻¹. I_{G} represents the G peak intensity of the Raman spectrum at 1,580±100 cm⁻¹.

In some embodiments, I_{D}/I_{G} of the first graphite material is 0.05, 0.06, 0.09, 0.1, or within a numerical range between any two thereof.

In some embodiments, the volume-based particle size Dv50 of the second graphite material is less than or equal to 15.0 µm, optionally 9.0 µm to 14.0 µm.

In some embodiments, the volume-based particle size Dv50 of the second graphite material is 8.0 µm, 9.0 µm, 10.0 µm, 11.0 µm, 12.0 µm, 13.0 µm, 14.0 µm, 15.0 µm, or within a numerical range between any two thereof.

The second graphite material has a small volume-based particle size Dv50, such that the intercalation and deintercalation path of the active ions are short, improving the transport performance of the active ions and electrons, and improving the kinetic performance of the battery.

In some embodiments, the tap density of the second graphite material is 1.0 g/cm³ to 1.3 g/cm³.

Herein, the term "tap density" refers to the mass per unit volume of powder in a container before tapping measured under specified conditions.

In the present disclosure, the tap density of the active material may be determined by adopting any method known in the art. As an example, determination may be performed with reference to GB/T 5162-2006 by adopting a powder tap density tester. The testing instrument may be a Dandong Bettersize BT-301, with the test parameters as follows: vibration frequency: 250±15 times/min, amplitude: 3±0.2 mm, number of taps: 5000, 25 mL graduated cylinder.

In some embodiments, the tap density of the second graphite material is 1.0 g/cm³, 1.05 g/cm³, 1.2 g/cm³, 1.25 g/cm³, 1.3 g/cm³, or within a numerical value between any two thereof.

A second graphite material with a tap density within the above range can further improve the electron conduction between particles and improve the kinetic performance of the battery.

In some embodiments, the specific surface area of the second graphite material is 0.75 m²/g to 1.75 m²/g.

In some embodiments, the specific surface area of the second graphite material is 0.75 m²/g, 0.85 m²/g, 0.95 m²/g, 1.05 m²/g, 1.15 m²/g, 1.25 m²/g, 1.35 m²/g, 1.45 m²/g, 1.55 m²/g, 1.65 m²/g, 1.75 m²/g, or within a numerical range between any two thereof.

The second graphite material with a specific surface area within a suitable range provides suitable adsorption sites, which can facilitate the adsorption of the active ions, further improving the kinetic performance of the secondary battery, reducing the probability of side reactions with the electrolyte solution, and balancing the cycling performance and kinetic performance of the battery.

In some embodiments, the proportion of the number of primary particles in the second graphite material is greater than or equal to 80%.

In some embodiments, the proportion of the number of primary particles in the second graphite material is 80%, 84%, 88%, 92%, 96%, 100%, or within a numerical range between any two thereof.

Primary particles have excellent structural stability, helping to reduce the breakage of graphite particles of the graphite material caused by expansion and contraction in the cycling process of the second graphite material, improve the stability of the second graphite material, reduce the irreversible consumption of the active ions, and improve the cycling performance of the secondary battery.

In some embodiments, the degree of graphitization of the second graphite material is 85% to 90%.

In some embodiments, the degree of graphitization of the second graphite material is 85%, 86%, 87%, 88%, 89%, 90%, or within a numerical range between any two thereof.

A second graphite material with a degree of graphitization within the above range can balance the cycling stability, gravimetric capacity, and active ion transport performance of the material, helping to obtain a battery with high energy density, long cycle life, and high kinetic performance.

In some embodiments, the particle size distribution (Dv90-Dv10)/Dv50 of the second graphite material is 1.20 to 1.70.

In some embodiments, the particle size distribution (Dv90-Dv10)/Dv50 of the second graphite material is 1.20, 1.25, 1.30, 1.35, 1.40, 1.45, 1.50, 1.55, 1.60, 1.65, 1.70, or within a numerical range between any two thereof.

The second graphite material with a volume-based particle size distribution within a suitable range helps to enable the negative electrode film layer to have suitable pore structures, reducing the resistance to ion transport in the liquid phase and improving the kinetic performance of the secondary battery. In addition, the second graphite material can also exhibit good packing performance, helping to improve the compaction density of the negative electrode film layer, further improving the energy density of the secondary battery.

In some embodiments, I_{D}/I_{G} of the second graphite material is 0.1 to 0.35. I_{D} represents the D peak intensity of a Raman spectrum at 1,350±100 cm⁻¹. I_{G} represents the G peak intensity of the Raman spectrum at 1,580±100 cm⁻¹.

In some embodiments, I_{D}/I_{G} of the second graphite material is 0.1, 0.12, 0.15, 0.18, 0.21, 0.23, 0.25, 0.30, 0.35, or within a numerical range between any two thereof.

In some embodiments, the gravimetric capacity of the second graphite material is 325 mAh/g to 340 mAh/g.

A second graphite material with a gravimetric capacity within the above range exhibits a relatively low lattice expansion rate and high crystal structural stability, reducing the cycling expansion and full-charge expansion of the battery, and further improving the cycling stability of the secondary battery.

In some embodiments, the first graphite material is prepared by adopting a method including: providing a first raw material; treating the first raw material to obtain a first intermediate product; and performing first graphitization treatment on the first intermediate product to obtain the first graphite material.

Herein, the term "graphitization treatment" refers to a heat treatment process of carbon materials. Under high-temperature conditions, carbon materials undergo a transition from a two-dimensional carbon network structure to a three-dimensional ordered structure through the growth of "micro crystals".

In some embodiments, the maximum power for the first graphitization treatment is 70% to 90% of the rated power of a first graphitization treatment device.

In some embodiments, the maximum power for the first graphitization treatment is optionally 70%, 75%, 80%, 85%, or 90% of the rated power of the first graphitization treatment device, or within a numerical range between any two thereof.

It is understood that a graphitization treatment device refers to any apparatus capable of performing the graphitization treatment, including, but not limited to, Acheson furnace, box furnace, internal series connection furnace, continuous graphitization furnace, electrical calcination furnace, medium-frequency furnace, and tubular furnace. The rated power of graphitization treatment devices produced by different manufacturers may vary, which may be selected according to the actual situation.

The maximum power for the first graphitization treatment adopted in the present disclosure is required to be lower than the rated power of the first graphitization treatment device to achieve uniformity of the temperature field in the graphitization treatment process, ensure the consistency of the gravimetric capacity of the material, and improve the cycle life of the battery.

In some embodiments, the first graphitization treatment device is an internal series connection furnace. The rated power of the internal series connection furnace is 25,000 W to 32,000 W.

In some embodiments, the first graphitization treatment device is an Acheson furnace. The rated power of the Acheson furnace is 28,000 W to 30,000 W.

In some embodiments, the maximum power for the first graphitization treatment is 22,000 W to 25,000 W.

In some embodiments, the maximum power for the first graphitization treatment is optionally 22,000 W, 22,500 W, 23,000 W, 23,500 W, 24,000 W, 25,000 W, or within a numerical range between any two thereof.

Controlling the maximum power for the first graphitization treatment can effectively control the degree of graphitization of the graphite material in the heat treatment process, forming a uniform disordered layer in the surface region while achieving a high degree of graphitization in the internal region of the particles of the first graphite material, and helping to improve the cycling stability of the secondary battery.

In some embodiments, the constant-power duration of the first graphitization treatment at the maximum power is 10 h to 50 h.

In some embodiments, the constant-power duration of the first graphitization treatment at the maximum power is 10 h, 13 h, 16 h, 19 h, 22 h, 25 h, 28 h, 31 h, 33 h, 36 h, 39 h, 42 h, 45 h, 48 h, 50 h, or within a numerical range between any two thereof.

In some embodiments, the temperature for the first graphitization treatment is 2,600°C to 3,000°C.

In some embodiments, the temperature for the first graphitization treatment is 2,600°C, 2,700°C, 2,800°C, 2,900°C, 3,000°C, or within a numerical range between any two thereof.

An appropriate graphitization treatment temperature and an appropriate graphitization treatment duration are not likely to cause excessive rearrangement of the precursor and result in high specific surface area and deterioration of high-temperature performance of the graphite material after the graphitization treatment, and can effectively improve the degree of graphitization of the first graphite material, helping to improve the cycle life of the secondary battery.

In some embodiments, the first raw material includes at least one of petroleum coke, needle coke, and pitch coke, and is optionally needle coke.

Herein, the term "petroleum coke" refers to coke formed by high-temperature carbonization of petroleum residue oil or petroleum pitch.

Herein, the term "needle coke" refers to needle-texture coke produced from coal tar pitch or petroleum pitch which undergoes liquid-phase carbonization to form an anisotropic intermediate phase, followed by processes such as high-temperature carbonization.

Herein, the term "pitch coke" refers to a solid material produced from coal tar pitch after high-temperature carbonization.

The needle coke has a series of advantages such as low thermal expansion coefficient, low porosity, low sulfur content, low ash content, low metal content, high conductivity, and easiness in graphitization. The graphite material obtained after graphitization treatment can achieve high ultimate compaction density and has low cycling expansion rate.

In some embodiments, based on the total volume of the structure of the first raw material, the proportion of the volume of the fibrous type structure in the first raw material is greater than or equal to 55%, optionally 58% to 70%.

Herein, the term "fibrous type structure", also known as streamline structure, refers to a structure of a raw material observed under microscopy that exhibits a distinct fibrous textural pattern.

Based on the morphological characteristics and the size of isochromatic areas observed under polarized light microscopy, the microstructures of coke may be classified into mosaic type, domain type, and fibrous type. Typically, microstructures with isochromatic areas smaller than 30 µm are identified as mosaic type structures; microstructures with isochromatic areas larger than 30 µm are identified as domain type structures; and anisotropic, banded isochromatic areas are identified as fibrous type structures.

In the present disclosure, the proportion of the volume of the fibrous type structure in the raw material may be determined by adopting any method known in the art. As an example, the raw material may be sampled according to the provisions of GB 1997-89, the raw material crushed to 1 mm is uniformly mixed, a sample of 40 g to 50 g is obtained by sample division, and 4 g to 5 g test sample of 0. 07 mm to 1.0 mm fractions is obtained by adopting a square-hole sieve for preparation of polished sections. Powdered coke and lump coke polished sections are prepared according to the specifications of MT 116.1-86, with the diameter of the powdered coke polished sections being not less than 22 mm, and the volume occupied by the cement being not less than 1/3. The test sample is placed on a glass slide with adhesive clay, flattened, and then positioned on a stage for focusing. After calibrating the microscope, a polarizer and an analyzer are adjusted to be orthogonal. A stone-blue inspection board (1λ) is inserted to produce a first-order red interference color in the field of view. The step length of a mechanical stage is determined to ensure 400 or more effective measurement points are uniformly distributed, with point spacing of 0.3 mm to 0.5 mm and a line spacing typically of 0.5 mm to 0.8 mm being recommended. Starting from one end of the test sample, the microstructure type under an intersection of crosshairs is identified. The proportion of the volume of the fibrous type structure in the raw material is then calculated by dividing the number of effective measurement points of optical textures of the fibrous type structure by the total number of measurement points statistically collected.

In some embodiments, based on the total volume of the structure of the first raw material, the proportion of the volume of the fibrous type structure in the first raw material is optionally 55%, 58%, 60%, 65%, 70%, or within a numerical range between any two thereof.

Raw materials with a high content of fibrous type structure are beneficial for improving the compaction density and gravimetric capacity of the first graphite material, such that the first graphite material maintains high integrity in the compaction process, and the battery has good energy density while having a long cycle life. However, an excessively high proportion of fibrous type structure may increase the cost and expansion rate of the graphite material, and deteriorate the kinetic performance. A first raw material with a volume proportion of the fibrous type structures within the above range not only exhibits relatively low cost, but also contribute to a high gravimetric capacity of the graphite and provide the battery cell with a favorable kinetic window throughout its entire life cycle, thus comprehensively improving the long-term cycling performance and overall electrochemical performance of the battery.

In some embodiments, the maximum gravimetric capacity that the first raw material can achieve is greater than the gravimetric capacity of the graphite material.

By using the high-grade raw material and controlling the degree of graphitization, the maximum gravimetric capacity that the first raw material can achieve will not be fully utilized, obtaining the graphite material with the disordered layer in the surface region, and achieving a balance between the cycle life and kinetic performance of the battery.

In some embodiments, treating the raw material includes: crushing, shaping, and classifying the raw material to obtain a first precursor; granulating the first precursor to obtain a first precursor semi-finished product; performing low-temperature carbonization on a mixture of the first precursor and a first precursor semi-finished product to obtain the first intermediate product.

Crushing is a process of reducing the particle size of the raw material. The raw material may be crushed by using any mechanical apparatus such as a crusher or a mill.

Shaping and classifying are processes of adjusting the particle size distribution of the raw material, so as to obtain the first precursor that meets the particle size requirement. The particle size and particle size distribution of the first precursor may be controlled by adjusting the classification frequency and the air intake volume.

It can be understood that low-temperature carbonization of the first precursor and the first precursor semi-finished product to obtain the intermediate product not only includes low-temperature carbonization of a mixture of the first precursor and the first precursor semi-finished product to obtain an intermediate product, but also includes separate low-temperature carbonization of the first precursor and the first precursor semi-finished product to respectively obtain a first intermediate product and a second intermediate product.

In some embodiments, the particle size Dv50 of the first precursor is 6.0 µm to 10.0 µm.

In some embodiments, the particle size Dv50 of the first precursor is 6.0 µm, 7.0 µm, 8.0 µm, 9.0 µm, 10.0 µm, or within a numerical range between any two thereof.

In some embodiments, the particle size distribution (Dv90-Dv10)/Dv50 of the first precursor is 1.05 to 1.75.

In some embodiments, the particle size distribution (Dv90-Dv10)/Dv50 of the first precursor is 1.05, 1.15, 1.25, 1.35, 1.45, 1.55, 1.65, 1.75, or within a numerical range between any two thereof.

In some embodiments, the tap density of the first precursor is 0.5 g/cm³ to 0.7 g/cm³.

In some embodiments, the tap density of the first precursor is 0.5 g/cm³, 0.55 g/cm³, 0.6 g/cm³, 0.65 g/cm³, 0.7 g/cm³, or within a numerical value between any two thereof.

In some embodiments, the particle size Dv50 of the first precursor semi-finished product is 11.0 µm to 15.0 µm.

In some embodiments, the particle size Dv50 of the first precursor semi-finished product is 11.0 µm, 12.0 µm, 13.0 µm, 14.0 µm, 15.0 µm, or within a numerical range between any two thereof.

The first precursor semi-finished product is obtained through the granulation of the first precursor. Therefore, the first precursor semi-finished product primarily forms secondary particles in the graphite material. Controlling the particle size of the first precursor and the first precursor semi-finished product helps to achieve the control of the particle size and particle size distribution of the graphite material, improving the cycling stability of the battery.

In some embodiments, the process of crushing, shaping, and classifying the raw material to obtain the first precursor includes: crushing, shaping, and classifying the raw material to obtain a secondary raw material; and removing fine powder accounting for 10% to 35% of the total mass of fine powder in the secondary raw material to obtain the first precursor. The fine powder has Dv50 of 3 µm to 7 µm and Dv99 of less than or equal to 30 µm. The particle size distribution (Dv90-Dv10)/Dv50 of the fine powder is greater than 1.6.

In some embodiments, the second graphite material is prepared through a method including: providing a second raw material; treating the second raw material to obtain a second precursor; performing second graphitization treatment on the second precursor to obtain a second graphitized product; and performing surface treatment on the second graphitized product to obtain the second graphite material.

In some embodiments, performing surface treatment on the second graphitized product to obtain the second graphite material includes: performing fusion treatment on the second graphitized product to obtain a second intermediate, mixing the second intermediate with pitch, and performing second carbonization treatment to obtain the second graphite material.

In the existing technology, pitch is directly used to coat the second graphitized product in order to improve the degree of surface disorder of the graphite material, improving the kinetic performance of the material. However, directly coating the second graphitized product severely compromises the powder compaction density of the graphite material, reduces the compaction density of the negative electrode film layer, and consequently impairs the energy density of the secondary battery. In the present disclosure, fusion treatment is performed on the second graphitized product prior to the pitch coating process. The fusion treatment can achieve the purposes of spheroidization and edge rounding. On one hand, the second intermediate obtained from fusion spheroidization exhibits a relatively regular structure, which can increase the powder compaction density of the second graphite material. On the other hand, the fine graphite particles obtained from edge rounding can fill the voids within the second intermediate, further improving the powder compaction density of the second intermediate. The fusion treatment can effectively compensate for the adverse effects of the pitch coating treatment on the powder compaction density of the graphite material, help to obtain a negative electrode film layer with high compaction density, and keep the battery to have high energy density.

In some embodiments, the frequency of the fusion treatment is optionally 20 Hz, 25 Hz, 30 Hz, 35 Hz, 40 Hz, or within a numerical range between any two thereof.

In some embodiments, the duration of the fusion treatment is 5 min to 15 min. In some embodiments, the duration of the fusion treatment is optionally 5 min, 6 min, 7 min, 8 min, 9 min, 10 min, 11 min, 12 min, 13 min, 14 min, 15 min, or within a numerical range between any two thereof.

The frequency and duration of the fusion treatment affect the powder compaction density and specific surface area of the second graphite material. The high frequency of the fusion treatment can improve the powder compaction density of the second graphite material, and can also reduce damage to the treatment device caused by excessively high frequency of the fusion treatment. In addition, the high frequency of the fusion treatment can also improve the specific surface area of the second graphite material and improve the kinetic performance of the material. The duration of the fusion treatment affects the powder compaction density, specific surface area, and Id/Ig of the second graphite material. A longer fusion treatment duration can improve the powder compaction density, specific surface area, and d/Ig of the second graphite material, obtaining a negative electrode film layer with high compaction density, and improving the energy density and kinetic performance of the battery.

In some embodiments, the treatment temperature for the second carbonization treatment is 950°C to 1,350°C.

In some embodiments, the treatment temperature for the second carbonization treatment is optionally 950°C, 1,000°C, 1,100°C, 1,200°C, 1,300°C, 1,350°C, or within a numerical range between any two thereof.

The treatment temperature for the second carbonization treatment affects I_{D}/I_{G} of the graphite material. If the treatment temperature for the second carbonization treatment is excessively high, it results in a high degree of pitch coating and a high coating layer integrity on the second graphite material, reducing I_{D}/I of the second graphite material, and adversely affecting the improvement of the kinetic performance of the battery. If the treatment temperature for the second carbonization treatment is too low, the surface functional groups of the pitch may not be completely removed, causing side reactions during cycling and degrading the cycling performance of the battery.

In some embodiments, the second raw material includes at least one of petroleum coke, needle coke, and pitch coke.

Herein, the term "petroleum coke" refers to coke formed by high-temperature carbonization of petroleum residue oil or petroleum pitch.

Herein, the term "needle coke" refers to needle-texture coke produced from coal tar pitch or petroleum pitch which undergoes liquid-phase carbonization to form an anisotropic intermediate phase, followed by processes such as high-temperature carbonization.

Herein, the term "pitch coke" refers to a solid material produced from coal tar pitch after high-temperature carbonization.

In some embodiments, the second raw material is petroleum coke. The petroleum coke has excellent graphitization performance and low thermal expansion coefficient, helping to obtain a second graphite material with excellent kinetic performance and cycling stability. In addition, the cost of the raw material is low and the cost is reduced.

In some embodiments, based on the total volume of the structure of the second raw material, the volume proportion of the mosaic type structure and the domain type structure is greater than or equal to 50%.

In some embodiments, the volume proportion of the mosaic type structure and the domain type structure is 50%, 60%, 70%, 80%, 90%, 100%, or within a numerical range between any two thereof.

In some embodiments, treating the second raw material specifically includes the following steps: crushing, shaping, and classifying the second raw material; and removing crushed fine powder to obtain a second precursor. The volume-based particle size Dv50 of the second precursor is 8.0 µm to 16.0 µm, and/or the (Dv90-Dv10)/Dv50 of the second precursor is 1.40 to 1.70.

In some embodiments, the volume-based particle size Dv50 of the second precursor is optionally 8.0 µm, 9.0 µm, 10.0 µm, 11.0 µm, 12.0 µm, 13.0 µm, 14.0 µm, 15.0 µm, 16.0 µm, or within a numerical range between any two thereof.

In some embodiments, the (Dv90-Dv10)/Dv50 of the second precursor is optionally 1.40, 1.50, 1.60, 1.70, or within a numerical range between any two thereof.

In some embodiments, the maximum power for the second graphitization treatment is 70% to 90% of the rated power of a second graphitization treatment device.

In some embodiments, the maximum power for the second graphitization treatment is optionally 70%, 75%, 80%, 85%, or 90% of the rated power of the second graphitization treatment device, or within a numerical range between any two thereof.

In some embodiments, the maximum power of the device in the second graphitization treatment is 21,500 W to 24,000 W. In some embodiments, the maximum power of the device in the second graphitization treatment is optionally 21,500 W, 23,000 W, 23,500 W, 24,000 W, or within a numerical range between any two thereof.

In some embodiments, the constant-power duration of the second graphitization treatment at the maximum power of the device is 5.5 h to 7.5 h. In some embodiments, the constant-power duration of the second graphitization treatment at the maximum power of the device is optionally 5.5 h, 6.0 h, 6.5 h, 7 h, 7.5 h, or within a numerical range between any two thereof.

The type of the secondary battery is not specially limited in the present disclosure. For example, the secondary battery may be a lithium-ion battery or the like. Generally, the secondary battery includes a positive electrode plate, a negative electrode plate, an electrolyte, and the like. During charging and discharging of the secondary battery, active ions are intercalated and deintercalated back and forth between the positive electrode plate and the negative electrode plate. The electrolyte functions to conduct the active ions between the positive electrode plate and the negative electrode plate. The type of the electrolyte is not specifically limited in the present disclosure and may be selected according to actual requirements. For example, the electrolyte may be selected from at least one of a solid electrolyte and a liquid electrolyte (i.e., electrolyte solution). In the secondary battery using the electrolyte solution and some secondary batteries using the solid electrolyte, a separator may also be included. The separator is arranged between the positive electrode plate and the negative electrode plate to play a role of isolating.

### [Negative electrode plate]

In some examples, the negative electrode plate includes a negative electrode current collector and a negative electrode film layer arranged on at least one surface of the negative electrode current collector. For example, the negative electrode current collector has two opposite surfaces in the thickness direction thereof. The negative electrode film layer is arranged on either or both of the two opposite surfaces of the negative electrode current collector.

As shown in FIG. 1 to FIG. 3, the negative electrode film layer 102 further includes a middle region 1023 located between the first region 1021 of the negative electrode film layer and the second region 1022 of the negative electrode film layer and having a thickness of 0.4 H (where H represents the thickness of the negative electrode film layer 102).

In some examples, the middle region includes the first graphite material and/or the second graphite material. For example, as shown in FIG. 2, the middle region 1023 may have the same composition as the first region 1021. Therefore, a distribution region of the active material in the first region in a thickness direction of the negative electrode film layer 102 is within a thickness range from the second surface 102b to 0.7 H of the negative electrode film layer. Alternatively, as shown in FIG. 3, the middle region 1023 may have the same composition as the second region 1022. Therefore, a distribution region of the active material in the second region in the thickness direction of the negative electrode film layer 102 is within a thickness range from the first surface 102a to 0.7 H of the negative electrode film layer. Alternatively, as shown in FIG. 1, the middle region 1023 includes both the active material in the first region and the active material in the second region. In this case, the middle region 1023 includes both a layer structure with the active material in the first region and a layer structure with the active material in the second region. The two layer structures may also have a layer interface.

In some examples, the negative electrode film layer may further include another negative electrode active material in addition to the active material. In some examples, the other negative electrode active material may include, but not limited to, at least one of conventional natural graphite, other artificial graphite, soft carbon, hard carbon, a silicon-based material, a tin-based material, and lithium titanate. The silicon-based material may include one or more of elemental silicon, silicon oxide, a silicon-carbon composite, a silicon-nitrogen composite, and a silicon alloy material. The tin-based material may include one or more of elemental tin, tin oxide, and a tin alloy material.

In some examples, the negative electrode film layer may further optionally include a negative electrode conductive agent. The type of the negative electrode conductive agent is not particularly limited in the present disclosure. As an example, the negative electrode conductive agent may include one or more of superconducting carbon, conductive graphite, acetylene black, carbon black, Ketjen black, carbon dot, carbon nanotube, graphene, and carbon nanofiber.

In some examples, the negative electrode film layer may further optionally include a negative electrode binder. The type of the negative electrode binder is not particularly limited in the present disclosure. As an example, the negative electrode binder may include one or more of styrene-butadiene rubber (SBR), water-soluble unsaturated resin SR-1B, waterborne acrylic resin (e.g., polyacrylic acid (PAA), poly(methyl methacrylate) (PMMA), and sodium polyacrylate PAAS), polyacrylamide (PAM), polyvinyl alcohol (PVA), sodium alginate (SA), and carboxymethyl chitosan (CMCS).

In some examples, the negative electrode film layer may further optionally include other adjuvants. As an example, the other adjuvants may include a thickener, for example, sodium carboxymethyl cellulose (CMC) or a PTC thermistor material.

In some examples, the negative electrode current collector may be a metal foil or a composite current collector. As an example of the metal foil, a copper foil may be used. The composite current collector may include a high molecular material substrate layer and a metal material layer formed on at least one surface of the high molecular material substrate layer. As an example, the metal material may include one or more of copper, copper alloy, nickel, nickel alloy, titanium, titanium alloy, silver, and silver alloy. As an example, the high molecular material substrate layer may include one or more of polypropylene (PP), polyethylene terephthalate (PET), polybutylene terephthalate (PBT), polystyrene (PS), and polyethylene (PE).

In the negative electrode plate, other additional functional layers other than the negative electrode film layer are not excluded. For example, in some examples, the negative electrode plate in the present disclosure may further include a conductive primer layer (which is, for example, formed by a conductive agent and a binder) sandwiched between the negative electrode current collector and the negative electrode film layer and arranged on the surface of the negative electrode current collector. In some examples, the negative electrode plate in the present disclosure may further include a protective layer covering the surface of the negative electrode film layer.

### [Positive electrode plate]

In some examples, the positive electrode plate includes a positive electrode current collector and a positive electrode film layer arranged on at least one surface of the positive electrode current collector. For example, the positive electrode current collector has two opposite surfaces in the thickness direction thereof, and the positive electrode film layer is arranged on either or both of the two opposite surfaces of the positive electrode current collector.

The positive electrode current collector may be a metal foil or a composite current collector. In an example of the metal foil, an aluminum foil may be used. The composite current collector may include a high molecular material substrate layer and a metal material layer formed on at least one surface of the high molecular material substrate layer. For example, the metal material may include one or more of aluminum, aluminum alloy, nickel, nickel alloy, titanium, titanium alloy, silver, and silver alloy. As an example, the high molecular material substrate layer may include one or more of polypropylene (PP), polyethylene terephthalate (PET), polybutylene terephthalate (PBT), polystyrene (PS), and polyethylene (PE).

The positive electrode film layer includes a positive electrode active material, an optional binder, and an optional conductive agent. The positive electrode film layer is usually formed by coating a positive electrode slurry on the positive electrode current collector and performing drying and cold pressing. The positive electrode slurry is usually formed by dispersing the positive electrode active material, the optional conductive agent, the optional binder, and any other components in a solvent and performing uniform stirring. The solvent may be, but is not limited to, N-methyl pyrrolidone (NMP). As an example, the binder for the positive electrode film layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. As an example, the conductive agent for the positive electrode film layer may include one or more of superconducting carbon, conductive graphite, acetylene black, carbon black, Ketjen black, carbon dot, carbon nanotube, graphene, and carbon nanofiber.

The positive electrode active material may be a positive electrode active material for a secondary battery well known in the art.

When the secondary battery in the present disclosure is a lithium-ion battery, the positive electrode active material positive electrode active material may include, but not limited to, one or more of lithium-containing transition metal oxide, a lithium-containing phosphate, and respective modified compounds thereof. Examples of the lithium-containing transition metal oxide may be, but not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof.

In some embodiments, the positive electrode active material includes lithium-containing phosphate. Examples of the lithium-containing phosphate may include, but not limited to, one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof.

The modified compounds of the above positive electrode active materials may be obtained by performing doping modification and/or surface coating modification on the positive electrode active materials.

### [Electrolyte]

In some examples, the electrolyte may be an electrolyte solution, and the electrolyte solution may include an electrolyte salt and a solvent.

The type of the electrolyte salt is not specifically limited, and may be selected according to actual requirements.

When the secondary battery in the present disclosure is a lithium-ion battery, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluorooxalate borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

The type of the solvent is not specifically limited, and may be selected according to actual requirements. In some examples, as an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS), and ethylsulfonylethane (ESE).

In some examples, the electrolyte solution further optionally includes an additive. For example, the additive may include a negative electrode film-forming additive, a positive electrode film-forming additive, or an additive capable of improving some performance of the secondary battery, such as an additive capable of improving overcharging performance of the secondary battery, an additive capable of improving high temperature performance of the secondary battery, or an additive capable of improving low temperature power performance of the secondary battery.

### [Separator]

The type of the separator is not specially limited in the present disclosure, and any well-known porous separator with good chemical stability and mechanical stability may be selected.

In some example, the material of the separator may include one or more of glass fiber, non-woven cloth, polyethylene, polypropylene, and polyvinylidene fluoride. The separator may be a single-layer film, or may be a multilayer composite film. When the separator is a multi-layer composite film, materials of the layers may be the same or different.

In some example, the positive electrode plate, the separator, and the negative electrode plate may form an electrode assembly through a winding process and/or a laminating process.

In some examples, the secondary battery may include an outer package. The outer package may be used to encapsulate the above electrode assembly and electrolyte.

In some examples, the outer package may be a hard case, such as a hard plastic case, an aluminum case, or a steel case. The outer package may also be a soft package, for example, a pouch type soft package. The material of the soft package may be plastic, such as one or more of polypropylene (PP), polybutylene terephthalate (PBT), and polybutylene succinate (PBS).

The shape of the secondary battery is not particularly limited in the present disclosure, and the secondary battery may be cylindrical, cuboidal, or in any other shape. FIG. 5 shows a cuboidal secondary battery 5 as an example.

In some examples, as shown in FIG. 6, the outer package may include a case 51 and a cover plate 53. The case 51 may include a bottom plate and a side plate connected to the bottom plate. The bottom plate and the side plate enclose an accommodating cavity. The case 51 has an opening in communication with the accommodating cavity. The cover plate 53 is used for covering the opening to close the accommodating cavity. The positive electrode plate, the negative electrode plate, and the separator may form an electrode assembly 52 through a winding process or a lamination process. The electrode assembly 52 is encapsulated in the accommodating cavity. The electrolyte solution infiltrates into the electrode assembly 52. The number of electrode assemblies 52 included in the secondary battery 5 may be one or more, and may be determined according to requirements.

A method for preparing the secondary battery of the present disclosure is well-known. In some examples, the positive electrode plate, the separator, the negative electrode plate, and the electrolyte solution may be assembled to form a secondary battery. As an example, the positive electrode plate, the separator, and the negative electrode plate may be wound or laminated to form an electrode assembly. The electrode assembly is placed in an outer package and dried, followed by the filling of the electrolyte solution and processes such as vacuum encapsulation, standing, formation, aging, and the like, to obtain a secondary battery.

In some examples of the present disclosure, the secondary battery according to the present disclosure may be assembled into a battery module. The number of the secondary batteries included in the battery module may be one or more. The specific number may be adjusted based on the application and capacity of the battery module.

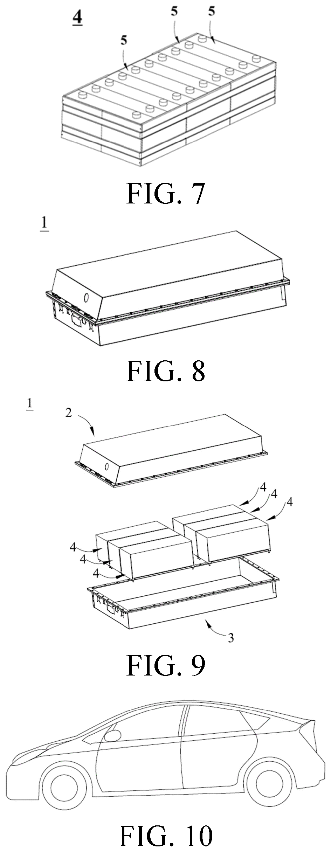

FIG. 7 is a schematic diagram of a battery module 4 as an example. Referring to FIG. 7, in the battery module 4, a plurality of secondary batteries 5 may be sequentially arranged in a length direction of the battery module 4. Of course, they may also be arranged in any other manner. Further, the multiple secondary batteries 5 may be secured through fasteners.

Optionally, the battery module 4 may further include a shell with an accommodating space. The multiple secondary batteries 5 are accommodated in the accommodating space.

In some examples, the battery modules may be further assembled to form a battery pack. The number of the battery modules included in the battery pack may be adjusted according to the application and capacity of the battery pack.

FIG. 8 and FIG. 9 are schematic diagrams of a battery pack 1 as an example. As shown in FIG. 8 and FIG. 9, the battery pack 1 may include a battery box and multiple battery modules 4 arranged in the battery box. The battery box includes an upper box 2 and a lower box 3. The upper box 2 is used for covering the lower box 3 to form an enclosed space for accommodating the battery modules 4. The multiple battery modules 4 may be arranged in the battery box in any way.

### Power consuming apparatus

The present disclosure further provides a power consuming apparatus, which includes at least one of the secondary battery, the battery module, and the battery pack in the present disclosure. The secondary battery, the battery module, or the battery pack may be used as a power source of the power consuming apparatus, and may also be used as an energy storage unit of the power consuming apparatus. The power consuming apparatus may be, but not limited to, a mobile device (for example, a mobile phone, or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The secondary battery, the battery module, or the battery pack may be selected according to the use requirements of the power consuming apparatus.

FIG. 10 is a schematic diagram of a power consuming apparatus as an example. The power consuming apparatus is a pure electric vehicle, a hybrid electric vehicle, or a plug-in hybrid electric vehicle. To meet requirements of the power consuming apparatus for high power and high energy density, a battery pack or a battery module may be used.

As another example, the power consuming apparatus may be a mobile phone, a tablet computer, a notebook computer, or the like. The power consuming apparatus is generally required to be light and thin, and may use a secondary battery as a power source.

### Examples

The following examples provide a more specific description of the content disclosed in the present disclosure. These examples are only used for descriptive purposes, as various modifications and changes within the scope of the content disclosed in the present disclosure are obvious to those skilled in the art. Unless otherwise stated, all parts, percentages, and ratios described in the following examples are based on mass, all reagents used in the examples are commercially available or synthesized by conventional methods and can be used directly without further treatment, and all instruments used in the examples are commercially available.

In the following examples and comparative examples, the first carbon-based material may be prepared through the following methods disclosed in the present disclosure.

### Preparation Examples

### Preparation of first graphite-A

Needle coke with a fibrous type structure proportion of 68% was crushed. The crushed material was shaped to remove fine powder to obtain a first precursor. 21% of fine powder relative to the total mass of fine powder was removed from the first precursor. Fine powder was a component with a maximum particle size of less than 5 µm. Dv50 of the first precursor was 9.0 µm, the particle size distribution (Dv90-Dv10)/Dv50 was 1.35, and the tap density of the first precursor was 0.65 g/cm³.

A part of the first precursor was granulated and shaped in a reaction kettle to obtain a second precursor semi-finished product with a particle size Dv50 of 14.3 µm.

The first precursor and the second precursor semi-finished product were respectively placed in a furnace for carbonization at a temperature of 1,100°C for 24 h to obtain a first intermediate product and a second intermediate product. The tap density of the first intermediate product was 0.98 g/cm³. The tap density of the second intermediate product was 0.91 g/cm³.

The first intermediate product and the second intermediate product were respectively subjected to graphitization treatment at a temperature of 2,800°C in an internal series connection furnace with a rated power of 28,000 W. The maximum power for the graphitization treatment was 22,400 W. The constant-power duration for maintaining the maximum power was 24 h. Primary particles and secondary particles were respectively obtained.

The primary particles and the secondary particles were uniformly mixed at a mass ratio of 1:1. The mixture was then screened to obtain a final graphite material.

The thickness of the disordered layer of the graphite material was 11.2 nm. The coefficient of variation of the thickness of the disordered layer was 34.1%. I_{D}/I_{G} was 0.078. The interlayer spacing d1 of the disordered layer was 0.3368 nm. The interlayer spacing d2 of the internal region was 0.3361 nm. The particle size distribution (Dv90-Dv10)/Dv50 was 1.28. The B/A value was 93.4%. The specific surface area was 1.65 m²/g. The volume-based particle size Dv50 was 10.2 µ m. The powder compaction density under a pressure of 49,000 N was 1.81 g/cm³. The gravimetric capacity was 350.8 mAh/g.

### Preparation of first graphite-B

The preparation method of a first graphite-B was basically the same as that of the first graphite-A, except that the temperature for graphitization treatment was 2,850°C. The thickness of the disordered layer of this graphite material was 10.5 nm, and I_{D}/I_{G} was 0.067.

### Preparation of first graphite-C

The preparation method of a first graphite-C was basically the same as that of the first graphite-A, except that the maximum power was the rated power of the device and the constant-power duration at the maximum power was 36 h, the surface region of the graphite material particles prepared did not have a disordered layer, and I_{D}/I_{G} was 0.041.

### Preparation of second graphite-A

Petroleum coke with a combined volume proportion of mosaic type and domain type structures of 68.0% was coarsely crushed. The coarsely crushed material was then further crushed and screened. The screened material was shaped and classified. During the classification, fine powder of a specific content was removed to obtain precursor particles with a volume-based particle size Dv50 of 12.0 µm and a particle size distribution (Dv90-Dv10)/Dv50 of 1.61.

The precursor was put into a furnace for pre-carbonization at a temperature of 1,000°C, with residence time in a high-temperature zone of 24 h, to obtain a pre-carbonized material with a tap density of 0.99 g/cm³.

The pre-carbonized material was subjected to graphitization treatment at a temperature of 2,850°C in a graphitization treatment device which was an internal series connection furnace with a rated power of 27,000 W. The maximum power for the graphitization treatment was 23,000 W. The constant-power duration for maintaining the maximum power was 10.0 h. A graphitized product was obtained.

The graphitized product was fed into a high-speed fusion machine for fusion treatment to obtain an intermediate. The fusion treatment was performed at a frequency of 30 Hz for 15 min. The intermediate and pitch were mixed at a mass ratio of 98%:2%. After mixing, carbonization treatment was performed at 1,150°C for 2 h. Finished product demagnetization and batch mixing processes were performed to obtain a second graphite-A.

### Preparation of second graphite-B to second graphite-D

The preparation methods of a second graphite-B to a second graphite-D were basically the same as that of the second graphite-A, except that I_{D}/I_{G} of the graphite materials was adjusted by adjusting the type of the raw material, the maximum power for the graphitization treatment, the duration of graphitization treatment, or the fusion frequency and duration of the fusion treatment. See Table 1 for details.

**Table 1**

| S/N | Process parameter | | | | |
|---|---|---|---|---|---|
| | Raw material | Graphitization treatment | | Surface treatment | |
| | Volume proportion of mosaic type and domain type structures | Power for graphitization treatment (W) | Constant-power duration for maintaining maximum power (h) | Fusion frequency (Hz) | Fusion duration (min) |
| Second graphite-A | 68% | 23,000 | 10.0 | 30 | 15 |
| Second graphite-B | 70% | 23,500 | 13.0 | 40 | 10 |
| Second graphite-C | 69% | 22,000 | 11.5 | 40 | 10 |
| Second graphite-D | 66% | 21,500 | 9.5 | 40 | 10 |

See Table 2 for performance parameters of graphite materials

**Table 2**

| S/N | Second graphite material | | | |
|---|---|---|---|---|
| | Powder compaction density at pressure of 49,000 N (g/cm³) | Id/Ig | Degree of graphitization | gravimetric capacity (mAh/g) |
| Second graphite-A | 1.72 | 0.23 | 90.10% | 335 |
| Second graphite-B | 1.79 | 0.21 | 90.50% | 338 |
| Second graphite-C | 1.70 | 0.25 | 89.90% | 334 |
| Second graphite-D | 1.65 | 0.30 | 85.30% | 325 |

### Example 1

The first graphite-A, a conductive agent carbon black (Super P), a thickener sodium carboxymethyl cellulose, and a binder styrene-butadiene rubber were thoroughly mixed at a weight ratio of 96:1:1.8:1.2 in an appropriate amount of solvent deionized water to form a first slurry.

The second graphite-A, a conductive agent carbon black (Super P), a thickener sodium carboxymethyl cellulose, and a binder styrene-butadiene rubber were thoroughly mixed at a weight ratio of 96:1:1.8:1.2 in an appropriate amount of solvent deionized water to form a second slurry.

The first slurry and the second slurry were simultaneously extruded through a dual-chamber coating device. The first slurry was coated on a negative electrode current collector copper foil. The second slurry was coated on the first slurry. After drying and cold pressing, a negative electrode plate was obtained. The coating mass ratio of the second slurry to the first slurry was 4:6 or 5:5.

LiFePO₄, conductive carbon black and polyvinylidene fluoride were mixed at a weight ratio of 97:1:2. An appropriate amount of solvent NMP was added and uniform stirring was performed to obtain a positive electrode slurry. The positive electrode slurry was coated onto two surfaces of a positive electrode current collector aluminum foil. After drying and cold pressing, a positive electrode plate was obtained.

Within an argon atmosphere glove box with a water content of < 10 ppm, diethyl carbonate (DEC), ethyl methyl carbonate (EMC), and ethylene carbonate (EC) were mixed at a weight ratio of 1:1:1 to obtain an organic solvent. LiPF₆ was then dissolved in the organic solvent to prepare an electrolyte solution with a concentration of 1.0 mol/L. Finally, vinylene carbonate (VC) was added. The content of VC was 2% of the total mass of the electrolyte solution.

A polypropylene film was used as a separator.

The positive electrode plate, the separator, and the negative electrode plate were stacked in sequence. The separator was located between the positive electrode plate and the negative electrode plate to serve an isolating function. Then, winding was performed to obtain an electrode assembly. The electrode assembly was placed in an outer package. After drying, the electrolyte solution was filled. Processes such as vacuum encapsulation, standing, formation, and shaping were performed to obtain a lithium-ion battery.

The negative electrode film layer had a first surface distant from the negative electrode current collector and a second surface arranged opposite to the first surface. The thickness H of the negative electrode film layer was 140 µm. A region within a thickness range from the second surface to 0.3 H of the negative electrode film layer was denoted as a second region of the negative electrode film layer. A region within a thickness range from the first surface to 0.3 H of the negative electrode film layer was denoted as a first region of the negative electrode film layer.

### Examples 2-7

The preparation methods were basically the same as that in Example 1, except that the graphite material combination of upper and lower layers was changed. See Table 3 for details.

### Comparative Example 1

The preparation method was basically the same as that in Example 1, except that the graphite material combination of upper and lower layers was changed. See Table 3 for details.

**Table 3**

| S/N | Second region of negative electrode film layer | First region of negative electrode film layer |
|---|---|---|
| Example 1 | Second graphite-A | First graphite-A |
| Example 2 | Second graphite-B | First graphite-A |
| Example 3 | Second graphite-C | First graphite-A |
| Example 4 | Second graphite-D | First graphite-A |
| Example 5 | 70 wt% second graphite-A + 30 wt% first graphite-A | First graphite-A |
| Example 6 | Second graphite-C | First graphite-B |
| Example 7 | Second graphite-C | First graphite-C |
| Comparative Example 1 | First graphite-A | Second graphite-C |

### Performance testing

### Test of cycling performance of secondary battery

At 60°C, the batteries in the examples and comparative examples were charged at a constant current of 1C to a voltage of 3.65 V, then charged at a constant voltage of 3.65 V until the current was ≤ 0.05C, and then discharged at a constant current of 1C to a voltage of 2.5 V, thus completing one charging and discharging cycle. The discharging capacity of the first cycle was recorded as C1. The charging and discharging cycle was repeated until the battery capacity faded to 80% of the initial capacity C1. The test was then stopped. The number of cycles completed was recorded.

### (2) Test of charging time

At 25°C, the secondary battery was charged at a constant current of 0.33C to 3.65 V, then charged at a constant voltage to a current of 0.05C, allowed to stand for 5 min, and then discharged at a constant current of 0.33C to 2.50 V. Its actual capacity was recorded as C0.

Then, the secondary battery was charged at constant currents of 1.0 C0, 1.3 C0, 1.5 C0, 1.8 C0, 2.0 C0, 2.3 C0, 2.5 C0, 3.0 C0 sequentially to either 3.5 V or a negative electrode cutoff potential of 0 V (whichever was reached first). After each charging step, the secondary battery was discharged at 1 C0 to 2.5 V. Negative electrode potentials corresponding to 10%, 20%, 30%,..., and 80% SOC (State of Charge) at different charging rates were recorded. Charging rate-negative electrode potential curves for different SOC states were plotted. Linear fitting was then performed to determine charging rates corresponding to the negative electrode potential being 0 V at different SOC states. The charging rates were defined as the charging windows for the corresponding SOC states and were respectively denoted as C10% SOC, C20% SOC, C30% SOC, C40% SOC, C50% SOC, C60% SOC, C70% SOC, and C80% SOC. The charging time T (in min) required to charge the secondary battery from 10% SOC to 80% SOC (under the premise that no lithium plating occurred on the secondary battery) was calculated according to the following formula: (60/C10% SOC + 60/C20% SOC + 60/C30% SOC + 60/C40% SOC + 60/C50% SOC + 60/C60% SOC + 60/C70% SOC + 60/C80% SOC)×10%. The shorter the charging time T, the better the fast charging performance of the secondary battery.

### (3) Test of cycling expansion of secondary battery

At 45°C, constant-current charging was performed at a current of 1.0C (i.e., a current value that would fully discharge the theoretical capacity in 1 h) to 3.65 V. Standing was performed for 10 min. Then constant-current discharging was performed at a current of 1.0C to 2.5 V. This constitutes a charging and discharging cycle. This process was repeated for 300 cycles under these conditions. At 25°C, the secondary battery after 300 cycles was charged at a constant current of 1.0C to 3.65 V, and then continuously charged at a constant voltage to a current of 0.05C. The secondary battery was disassembled and the thickness L1 of the electrode plate at this time was recorded. The initial thickness of the electrode plate before winding was L0. The cycling expansion rate of the electrode plate after a 300th cycle was calculated according to (L1/L0-1)×100%.

### Test results

See Table 4 and Table 5 for test results. From the tables, it can be seen that I_{D}/I_{G} of the active material in the second region being greater than I_{D}/I_{G} of the active material in the first region helps to improve the cycling stability and kinetic performance of the battery. I_{D}/I_{G} of the active material in the second region being 0.2 to 0.35 helps to further improve the kinetic performance of the battery while maintaining a long cycle life.

**Table 4**

| S/N | Negative electrode film layer | | | Battery | |
|---|---|---|---|---|---|
| | Second region I_{D}/I_{G} | First region I_{D}/I_{G} | Difference Δ*K* between I_{D}/I_{G} of active material in second region and I_{D}/I_{G} of active material in first region | Number of cycles | Charging time min |
| Example 1 | 0.23 | 0.078 | 0.152 | 2,125 | 22.97 |
| Example 2 | 0.21 | 0.078 | 0.132 | 2,130 | 23.32 |
| Example 3 | 0.25 | 0.078 | 0.172 | 2,096 | 22.81 |
| Example 4 | 0.30 | 0.078 | 0.222 | 2,113 | 22.63 |
| Example 5 | 0.20 | 0.078 | 0.122 | 2,108 | 24.23 |
| Comparative Example 1 | 0.078 | 0.250 | -0.172 | 2,004 | 26.43 |

From Table 5, it can be seen that I_{D}/I_{G} of the active material in the first region being 0.05 to 0.1 helps to further reduce the cycling expansion of the battery and improve the cycling stability of the battery in the later stage.

**Table 5**

| S/N | Negative electrode film layer | | | Battery performance | |
|---|---|---|---|---|---|
| | Second region I_{D}/I_{G} | First region ID/IG | Difference Δ*K* between I_{D}/I_{G} of active material in second region and I_{D}/I_{G} of active material in first region | Expansion rate | Number of cycles |
| Example 1 | 0.23 | 0.078 | 0.152 | 23.2% | 2,125 |
| Example 6 | 0.25 | 0.067 | 0.183 | 22.6% | 2,118 |
| Example 7 | 0.25 | 0.041 | 0.209 | 27.9% | 2,087 |

It needs to be noted that the present disclosure is not limited to the embodiments above. The above described embodiments are merely exemplary, and embodiments having substantially the same technical idea and the same effects within the scope of the technical solution of the present disclosure are all included in the technical scope of the present disclosure. In addition, other embodiments constructed by applying various modifications conceivable to those skilled in the art to the embodiments and combining some of the constituent elements of the embodiments without departing from the scope of the essence of the present disclosure are also included in the scope of the present disclosure.

## Claims

1. A secondary battery, comprising a negative electrode plate, wherein the negative electrode plate comprises a negative electrode current collector and a negative electrode film layer formed on at least one surface of the negative electrode current collector, the negative electrode film layer has a first surface distant from the negative electrode current collector and a second surface arranged opposite to the first surface, the thickness of the negative electrode film layer is denoted as H, a region within a thickness range from the second surface to 0.3 H of the negative electrode film layer is denoted as a first region of the negative electrode film layer, a region within a thickness range from the first surface to 0.3 H of the negative electrode film layer is denoted as a second region of the negative electrode film layer, and I_{D}**/**I_{G} of an active material in the second region is greater than I_{D/}I_{G} of an active material in the first region, where I_{D}**/**I_{G} is a ratio of D peak intensity to G peak intensity of a Raman spectrum, I_{D} represents the D peak intensity of the Raman spectrum at 1,350±100 cm⁻¹, and I_{G} represents the G peak intensity of the Raman spectrum at 1,580±100 cm⁻¹.

2. The secondary battery according to claim 1, wherein a difference Δ*K* between I_{D}/I_{G} of the active material in the second region and I_{D}/I_{G} of the active material in the first region satisfies: 0<Δ*K*≤0.4, optionally 0.1≤Δ*K*≤0.25.

3. The secondary battery according to claim 1 or 2, wherein I_{D}/I_{G} of the active material in the first region is less than or equal to 0.14, optionally 0.05 to 0.1; and/or, I_{D}/I_{G} of the active material in the second region is greater than or equal to 0.1, optionally 0.2 to 0.35.

4. The secondary battery according to any one of claims 1 to 3, wherein the particle size distribution (Dv90-Dv10)/Dv50 of the active material in the second region is greater than the particle size distribution (Dv90-Dv10)/Dv50 of the active material in the first region.

5. The secondary battery according to any one of claims 1 to 4, wherein the degree of graphitization of the active material in the second region is lower than the degree of graphitization of the active material in the first region.

6. The secondary battery according to any one of claims 1 to 5, wherein the proportion of the number of primary particles of the active material in the second region is higher than the proportion of the number of primary particles of the active material in the first region.

7. The secondary battery according to any one of claims 1 to 6, wherein the active material in the first region comprises a first graphite material, a first particle body of the first graphite material comprises an internal region and a surface region that at least partially surrounds the internal region, the surface region refers to a region formed by extending a distance of 30 nm from the surface of the first particle body of the first graphite material towards the inside of the particle, and the surface region comprises a disordered layer.

8. The secondary battery according to claim 7, wherein the thickness of the disordered layer is 1 nm to 20 nm.

9. The secondary battery according to any one of claims 1 to 8, wherein the active material in the second region comprises a second graphite material, the second graphite material comprises a second particle body and a coating layer at least partially coated on the surface of the second particle body, and the coating layer comprises amorphous carbon.

10. The secondary battery according to claim 9, wherein the powder compaction density of the second graphite material under a pressure of 49,000 N is 1.60 g/cm³ to 1.80 g/cm³.

11. The secondary battery according to any one of claims 7 to 10, wherein the first graphite material satisfies at least one of the following conditions:
(1) the specific surface area of the first graphite material is 1.0 m²/g to 1.8 m²/g, optionally 1.1 m²/g to 1.7 m²/g;
(2) the volume-based particle size Dv50 of the first graphite material is 7.0 µm to 14.0 µm, optionally 8.0 µm to 12.0 µm;
(3) the particle size distribution (Dv90-Dv10)/Dv50 of the first graphite material is 1.0 to 1.4, optionally 1.1 to 1.3;
(4) the gravimetric capacity of the first graphite material is 345 mAh/g to 355 mAh/g, optionally 347 mAh/g to 353 mAh/g;
(5) the powder compaction density of the first graphite material under a pressure of 49,000 N is less than or equal to 1.85 g/cm³, optionally from 1.78 g/cm³ to 1.85 g/cm³;
(6) the volume-based particle size Dv50 of the graphite material is denoted as A, the volume-based particle size Dv50 of the graphite material after cold pressing under a pressure of 20,000 N is denoted as B, and then the graphite material satisfies: B/A≥85%, optionally 85% to 98%;
(7) the proportion of the number of primary particles in the first graphite material is 40% to 60%, optionally 50% to 60%; and
(8) the degree of graphitization of the first graphite material is 88% to 95%.

12. The secondary battery according to any one of claims 9 to 10, wherein the second graphite material satisfies at least one of the following conditions:
(1) the volume-based particle size Dv50 of the second graphite material is less than or equal to 15.0 µm, optionally 9.0 µm to 14.0 µm;
(2) the tap density of the second graphite material is 1.0 g/cm³ to 1.3 g/cm³;
(3) the specific surface area of the second graphite material is 0.75 m²/g to 1.75 m²/g;
(4) the proportion of the number of primary particles in the second graphite material is greater than or equal to 80%;
(5) the degree of graphitization of the second graphite material is 85% to 90%;
(6) the particle size distribution (Dv90-Dv10)/Dv50 of the second graphite material is 1.20 to 1.70; and
(7) the gravimetric capacity of the second graphite material is 325 mAh/g to 340 mAh/g.

13. A power consuming apparatus, comprising the secondary battery according to any one of claims 1 to 11.
